# EUROPEAN PATENT APPLICATION

(11) **EP 2 295 002 A2**
(43) Date of publication of application: **16.03.2011**
(21) Application number: 10009892.0
(22) Date of filing: 04.07.2005
(51) Int. Cl.: A61C 1/08

(54) **Handle part connectable to a guide part**

(30) Priority: 05.08.2004 SE 0401984
(62) Divisional of application: 05756985.7
(71) Applicant: Nobel Biocare Services AG, 8058 Zürich-Flughafen (CH)
(72) Inventor: Brajnovic, Izidor, 511 70 Rydal (SE)
(74) Representative: Byström, Kurt Linus

(57) **Abstract**

The invention concerns a handle part connectable to a guide part. The handle part is made up of a first part (14) and a second part (15). The first part is provided at its back end with an external thread (14a) and in its front part with an interaction part (14b). The second part is provided in its back parts with an internal thread (15a) and at its front end with an internal space (15b). The first part can be screwed into the second part by means of its external thread and can be assigned with different longitudinal displacement positions relative to the second part.

## Description

Guide device able to interact with a number of sleeves disposed in a tooth template.

The present invention relates to a guide device which is able to interact with a number of sleeves disposed in a tooth template or surgical template and includes a guide part which can be fitted to a corresponding sleeve which is connected to or forms part of a handle part for fitting to the corresponding sleeve of the guide part.

The invention can inter alia be used in connection with rapid dental treatments, e.g. dental treatments in accordance with the "Teeth in an Hour" concept. When implants are fitted, in said rapid treatments use is made inter alia of surgical templates with sleeves, which constitute guides for guide parts which in turn guide the instrument in question, e.g. drill, knife, etc., in connection with the insertion of the implant. The positions of the sleeves in the surgical' template are planned in a manner known per se in a computer.

The guide part can be such that its external diameter corresponds to an internal diameter of the corresponding tooth template sleeve. The guide part can be made up of a guide sleeve whose central aperture constitutes a guide for a desired instrument, e.g. a drill. The guide part can be supported on a shaft so that it can easily be moved between the various positions for the tooth template sleeves.

In the dental work in question it is known that there are various degrees of difficulty which are dependent on the various positions of the teeth and of the treatment sites in the oral cavity. The teeth and the spaces in the front parts of the oral cavity are easily accessible, whereas problems can arise in achieving rapid and effective treatment in the case of teeth and spaces in the inner parts of the oral cavity. If a shaft-mounted guide part or shaft-mounted guide parts are also desired for the inner teeth and spaces, there can be problems both in fitting the guide part or guide parts and in preventing the shaft protruding from the guide part from hindering the actual work and causing significant discomfort to the patient. The present invention is intended to solve these problems.

It is also desirable that the equipment used should be clear-cut and easy to operate and that for example it can be operated with only small actuation movements. It should be easy to change between different guide parts and shafts during the course of the work. There is also a need for the equipment used to be easy to clean and sterilize. The present invention also solves these problems.

What can mainly be regarded as characterizing for the invention is inter alia the fact that the guide part is disposed with a ball bearing race and that the handle part includes or interacts with an actuation part which is able to interact with the ball bearing race, and by means of which different relative positions between the handle part and the guide part are lockably set up.

In a preferred embodiment the handle part consists of two parts which can be displaced in relation to each other. The first part can include an internal thread and the second part can include an external thread which can interact with the internal thread. The second part includes a part which receives the ball bearing race. On activation the first part is arranged to take up different longitudinal displacement positions in relation to the ball bearing race when the latter is inserted or located in a space assigned to the ball bearing race in the second part. In a first longitudinal displacement position for the first part the latter is arranged so as to allow the insertion of the ball bearing race in the space. In a second longitudinal displacement position for the first part the latter is arranged so as to prevent the removal of the ball bearing race from the space but to allow rotary movements of the ball bearing race relative to the second part. In a third longitudinal displacement position, finally, the first part locks the ball bearing race to the second part and prevents rotation of the ball bearing race relative to the second part. It is preferably the guide part which supports a spherical part in the ball bearing race on a supporting part which exhibits a diameter or cross-sectional area significantly smaller than the diameter or cross-sectional area of the spherical part. The extent to which it is smaller can lie within the range 50-75%. The second part exhibits in said space a lateral recess which is arranged with a first width which exceeds the diameter or cross-sectional area of the spherical part and a second width which is less than the diameter or cross-sectional area of the spherical part but exceeds the diameter or cross-sectional area of the supporting part. In this way the first and second parts become rotatably arranged relative to the guide part for different height and rotation positions. In the combined adjusted height and rotation positions in question there can be locking between the guide part and the handle part. Further embodiments of the inventive idea are apparent from the appended claims.

What is proposed above makes possible a particularly advantageous adjustment function for the handle part where the latter, when the guide part is fitted in a corresponding tooth sleeve, can be given an optimal position where the handle part to the greatest possible extent is prevented from interfering with the dental work while at the same time there can be the least possible discomfort to the patient, The further developments of the inventive idea provide the possibility that small actuation movements can be made in order to attain the different position settings. At the same time the various parts can easily be disassembled for cleaning and sterilization.

An embodiment of a guide device according to the invention which is proposed at present will be described below with simultaneous reference to the appended drawing, where
- Figure 1: shows in vertical section parts of a mandible with teeth and a tooth template arranged in relation to them with a guide sleeve and a guide device with a guide sleeve and handle part and parts of a drill,
- Figure 2: shows in exploded view the first and second parts in the handle part,
- Figure 3: shows in longitudinal section, and rotated by 90° relative to the view in Figure 2, another part in the handle part,
- Figure 4: shows in longitudinal section, and at reduced scale relative to Figures 2 and 3, the handle part with the first and second parts, as shown in Figure 2, assembled,
- Figure 5: shows in longitudinal section parts of the second part, as shown in Figure 2, with a sphere in place and different longitudinal displacement positions shown in principle for the first part relative to the second part and the ball bearing race, and
- Figures 6 and 7: show in lateral views other types of instruments (knives) which can be fitted to the guide part.

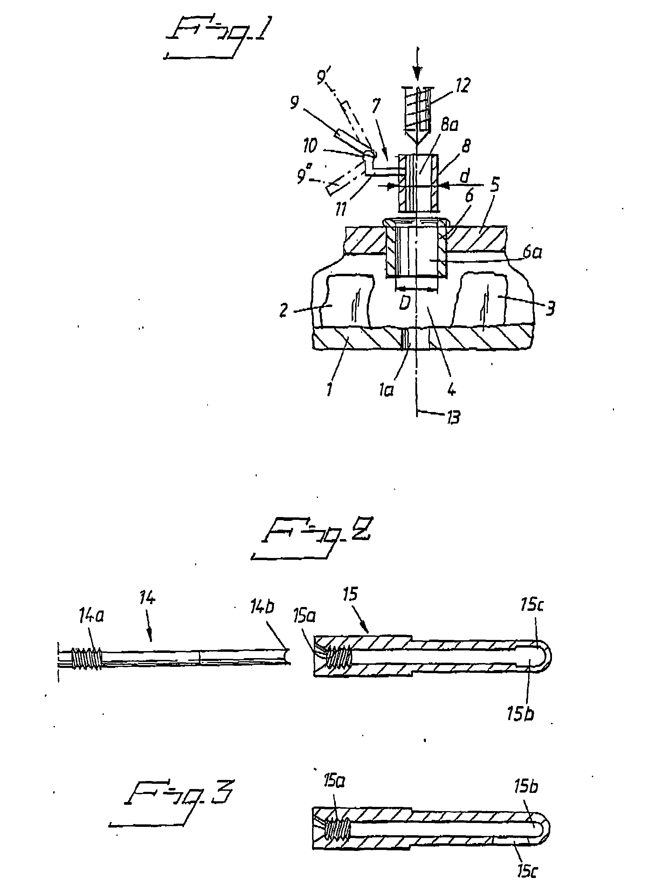

In Figure 1 a mandible is shown in principle as 1. The mandible supports teeth 2 and 3 and also exhibits a space 4 situated between said teeth. A template 5, e.g. tooth template, surgical template, etc., is fitted to the teeth in a manner known per se. The template can exhibit one or more guide sleeves 6, the positions of which are pre-calculated by means of a computer (not shown) in a manner known *per se*. A guide device is shown in principle as 7 and includes a guide part 8 and a handle part 9. The guide and handle parts are connected to each other via a ball bearing race 10 and a part 11 supporting the latter. The sleeve 6 is provided with a central aperture 6a with a diameter D. The sleeve 8 exhibits an external diameter d which is only slightly smaller than the diameter D. The sleeve 8 thus guides into the aperture 6a in the sleeve 6. The sleeve 8 is in turn provided with a central aperture 8a, into which a drill 12 is guided when the sleeve 8 is lowered into the sleeve 6 for uptake by a drill hole 1a in the mandible. Said drill hole constitutes a hole uptake for an implant in a manner known *per se*. Thanks to the ball bearing race 10 the handle part 9 can be rotated to different height positions, two of which have been,denoted 9' and 9" in Figure 1. In addition the sleeve 8 is rotatable relative to the sleeve 6 around a longitudinal axis 13 which is common to said sleeves and the drill 12 and the drill hole 1a.

In accordance with Figure 2 the handle part is made up of a first part 14 and a second part 15. The first part is provided at its back end with an external thread 14a and is provided in its front part with an interaction part 14b, by means of which the first part is able to interact with the ball bearing race referred to above. In its back parts the second part exhibits an internal thread 15a, in which the first part can be screwed into the second part by means of its thread 14a. At its front end the second part exhibits an internal space 15b. In addition the second part exhibits a lateral recess 15c, via which the ball bearing race 10 (see Fig. 1) can be inserted into the space with the supporting part 11 extending outside to the sleeve 6.

Figure 3 shows said lateral recess and space in a view that is rotated by 90° relative to Figure 2.

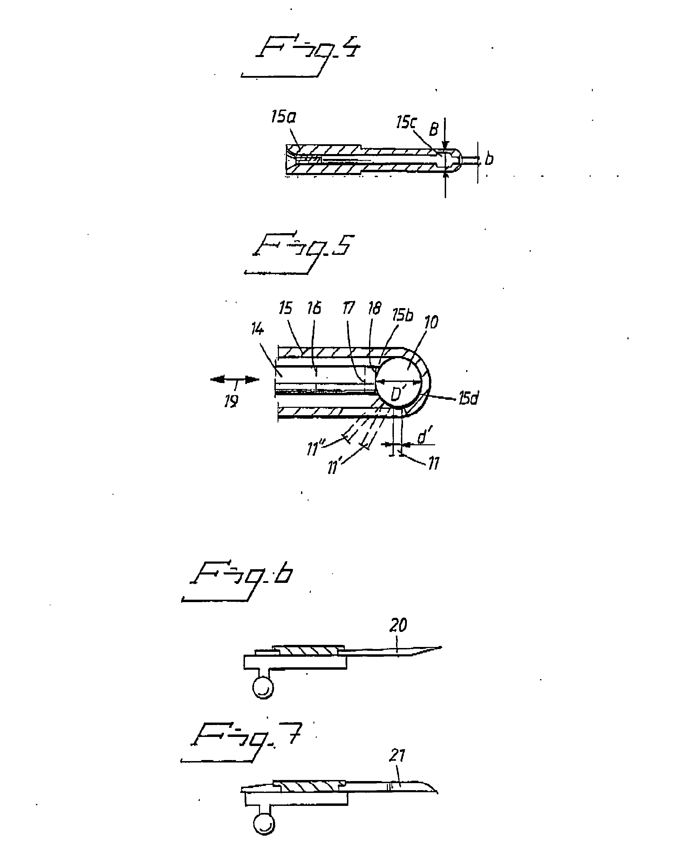

Figure 4 shows the design of the lateral groove 15c. The lateral groove exhibits a first width B and a second width b. The greater width exceeds the diameter or width of the sphere 10, while the smaller width b is less than the diameter of the sphere but exceeds the diameter or cross-sectional area of the supporting part. The sphere can thus be inserted into the space 15b at the greater width and advanced towards the front end of the second part into the space 15b (see Fig. 2),

In accordance with Figure 5, different longitudinal displacement positions relative to the second part 15 can be assigned to the first part 14. The first longitudinal displacement position, which has in principle been indicated as 16, allows the sphere 10 to be inserted into the space 15b and pushed forward or advanced into the space 15b. In a second longitudinal displacement position, which has been indicated as 17, the first part 14 makes it impossible for the sphere 10 to be removed from the space 15b. The sphere is rotatable in the space, however, in this position 17 for the first part. In a third position, which has been indicated as 18, the sphere is locked to a front internal wall 15d of the second part 15. In positions 17 and 18 the supporting member 11 extends to the outside via the lateral recess 15c, at the smaller width b. Said smaller width will thus exceed the diameter d' or cross-sectional area of the supporting member. The rotatability of the sphere in the second position 17 allows the supporting member in Figure 5 to extend to an optionally adjusted position in the plane of the paper. Two further rotational positions have been shown in Figure 5 as 11' and 11". Depending on the choice of the width b and the diameter d', the supporting member can also be actuated relative to the handle part, or vice versa, even at right angles to the plane of the figure in accordance with Figure 5. For the sphere 10 the diameter D' thereof, which will be less than the width B but exceed the width b, has also been indicated in Figure 5. It can be seen that the construction described above makes possible a large number of individual rotational positions between the second part and the guide part 8. The actuation directions for the first part relative to the second part are shown as 19 in Figure 5.

Figures 6 and 7 are intended to show in principle that the guide part can be a guiding member for other types of instruments than drills, e.g. knives. In Figures 6 and 7 the blades of the knives have been indicated as 20 and 21.

### Embodiments:

Guide device which is able to interact with a number of sleeves disposed in a tooth template (or surgical template) and includes a guide part which can be fitted to a corresponding sleeve and which is connected to or forms part of a handle part for fitting to the corresponding sleeve of the guide part, **characterized in that** the guide part is disposed with a ball bearing race, and that the handle part includes or interacts with an actuation part which is able to interact with the ball bearing race, and by means of which different relative positions between the handle part and the guide part are lockably set up.

The handle part may consist of two parts which can be displaced in relation to each other, here called first and second parts. The first part may include an internal thread and the second part may include an external thread which can interact with the internal thread. The second part may include a part which receives the ball bearing race.

On activation the first part may be arranged to take up different longitudinal displacement positions in relation to the ball bearing race when the latter is inserted or located in a space assigned to the ball bearing race in the second part, wherein a first longitudinal displacement position for the first part the latter is arranged so as to allow the insertion of the ball bearing race in the space, wherein a second longitudinal displacement position for the first part the latter is arranged so as to prevent the removal of the ball bearing race from the space but to allow rotary movements of the ball bearing race relative to the second part, and wherein a third longitudinal displacement position the first part locks the ball bearing race to the second part and prevents rotation of the ball bearing race relative to the second part.

The guide part may support a spherical part in the ball bearing race on a supporting part which exhibits a diameter or cross-sectional area which is significantly, e.g. 50-75%, smaller than the diameter or cross-sectional area of the spherical part.

In said space the second part may be disposed with a lateral recess which is arranged with a first width which exceeds the diameter or cross-sectional area of the spherical part and a second width which is less than the diameter or cross-sectional area of the spherical part but exceeds the diameter or cross-sectional area of the supporting part. The second width and the diameter or cross-sectional area of the supporting part may be chosen in such a way that when the spherical part is fitted in the space the first and second parts with the first part in the second position can be rotated relative to the guide part, and/or vice versa, to different height and rotational positions, wherein in the third position a desired position for the first part between the first and second parts and the guide part can be set.

The guide part may include or consist of a guide sleeve which is able to interact with a corresponding sleeve in the tooth template, wherein when the tooth template and guide sleeve are fitted the handle part is adjustably disposed as a function of the position for the sleeve of the tooth template in the oral cavity, in which situation the handle part as an example can protrude essentially straight out of the oral cavity during work on front teeth and diagonally outwards and upwards/downwards during work on inner teeth.

The guide device can include or consist of a supporting member for surgical work, e.g. a knife-shaped member.

One and the same handle part may be arranged to allow replacement or choice of a guide part, or vice versa.

The first and second parts and the guide part may be separable from each other so as to make cleaning and sterilization possible.

The replacement of a guide part and/or choice of a position between the handle part and the guide part can be effected by means of a slight relative rotational movement (or movements) between the first and second parts.

The handle part may be constructed in such a way as to allow simple displacement of the guide part between different tooth template sleeves.

The invention is not limited to the embodiments shown above as examples but can be subject to modifications within the scope of the following claims.

## Claims

1. A handle part connectable to a guide part, the handle part being made up of a first part (14) and a second part (15), wherein the first part is provided at its back end with an external thread (14a) and is provided in its front part with an interaction part (14b), wherein the second part in its back parts exhibits an internal thread (15a) and at its front end exhibits an internal space (15b), whereby the first part can be screwed into the second part by means of its external thread and be assigned different longitudinal displacement positions relative to the second part.

2. Handle part as claimed in claim 1, **characterized in that** the second part in addition exhibits a lateral recess (15c).

3. Handle part as claimed in claim 1 or 2, **characterized in that** the interaction part (14b) is arranged to assume various positions within the internal space (15b).

4. Handle part as claimed in claim 2 and 3, **characterized in that** in at least one of said positions the interaction part (14b) partially overlaps the lateral recess (15c).

5. Handle part as claimed in any preceding claim, **characterized in that** the first and second parts and the guide part are separable from each other so as to make cleaning and sterilization possible.

6. A combination of a handle part according to any claim 1-5 and a guide part (8).
